(19) Europäisches Patentamt
European Patent Office
Office européen des brevets

(11) **EP 3 144 483 A1**

(12) **EUROPÄISCHE PATENTANMELDUNG**

(43) Veröffentlichungstag:
**22.03.2017 Patentblatt 2017/12**

(51) Int Cl.:
*F01D 21/02* *(2006.01)* *G05B 9/03* *(2006.01)*

(21) Anmeldenummer: **15186022.8**

(22) Anmeldetag: **21.09.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Siemens Aktiengesellschaft 80333 München (DE)**

(72) Erfinder:
• **Bennauer, Martin 46242 Bottrop (DE)**
• **Ophey, Martin 47638 Straelen (DE)**

(54) **EINRICHTUNG ZUR SCHNELLEN REAKTION AUF NETZSEITIGE STÖRUNGEN BEI ANLAGEN**

(57) Die Erfindung betrifft eine Einrichtung (100) zum Regeln einer Kraftwerksanlage, wobei im Störfall wie z. B. einem 3-poligen Kurzschluss die Regelungsaufgabe nicht mehr von der zentralen Steuereinheit (62) übernommen wird, sondern von einem separaten Störmodul (63).

EP 3 144 483 A1

Printed by Jouve, 75001 PARIS (FR)

**Beschreibung**

Die Erfindung betrifft eine Einrichtung umfassend eine zentrale Steuereinheit, die eine Stellgröße als Stellgrößen-Ausgangssignal bereitstellt, einen Messsensor zum Ermitteln eines Messwertes, wobei der Messsensor den Messwert als Messwert-Ausgangssignal für die zentrale Steuereinheit bereitstellt.

Desweiteren betrifft die Erfindung ein Verfahren zur Regelung einer Kraftwerksanlage, umfassend eine Dampfturbine und einen Generator, wobei der Betriebszustand über Messen von verschiedenen Messwerten ermitteln wird, wobei die Regelung der Anlage zunächst eine Steuereinheit übernimmt.

Kraftwerksanlagen umfassen im Wesentlichen eine Antriebseinheit in Form einer Gas- oder/und Dampfturbine sowie einen Generator, der drehmomentübertragend mit der Antriebseinheit gekoppelt ist. In der heutigen Turbinenentwicklung von Dampf- und Gasturbinen ist zu erkennen, dass immer höhere Energiedichten realisiert werden sollen. Nachteilig ist hierbei, dass die Dampf- bzw. Gasturbinen gegenüber der maximal auftretenden Rotorbeschleunigung sensitiver werden.

Ein Maß für die maximale Beschleunigung ist die sogenannte Anlaufzeitkonstante $T_A$ die wie folgt ermittelbar ist:

Gleichung 1:

$$\omega_{nenn} = \int_0^{T_A} \omega_{nenn}\, dt = \int_0^{T_A} \frac{M_{nenn}}{\theta}\, dt = \int_0^{T_A} \frac{P_{nenn}}{\omega_{nenn}\theta}\, dt$$

Gleichung 2:

$$\omega_{nenn} = \frac{P_{nenn}}{\omega_{nenn}\theta}\, T_A \;\rightarrow\; T_A = \frac{\omega_{nenn}{}^2\theta}{P_{nenn}} = \frac{(2\,\pi\, n_{nenn})^2\theta}{P_{nenn}}$$

Hierbei bedeuten $n_{nenn}$ = Nenndrehzahl, $P_{nenn}$ = Nennleistung und $\theta$ = Massenträgheit.

Bei Gasturbinen, die mit einer Welle betrieben werden, ist der Verdichter mit auf der Welle angeordnet und entnimmt Leistung. Dies führt zu dem Effekt, dass Einwellengasturbinen nicht übermäßig sensitiv gegenüber der maximalen Beschleunigung sind.

Gemäß Gleichung 2 wird bei größer werdender Nennleistung und gleichbleibender Massenträgheit die Anlaufzeitkonstante kleiner. Dies führt zu unterschiedlichen Problemen in der Turbinenregelung. Beispielsweise ist die Sensitivität gegenüber der Überdrehzahl erhöht sowie die Sensitivität gegenüber der Sicherstellung der transienten Stabilität am Netz, z. B. bei einem 3-poligen kraftwerksnahen Kurzschluss.

In der heutigen Turbinenautomatisierung ist zu erkennen, dass immer höhere Zykluszeiten realisiert werden. Dies führt allerdings zu Schwierigkeiten bei der Erkennung von Netzstörungen, welches die richtige Reaktion auf diese erschwert.

Die Erfindung versucht hier Abhilfe zu schaffen. Aufgabe der Erfindung ist es eine verbesserte Regelung einer Kraftwerksanlage anzubieten.

Die Aufgabe wird gelöst durch eine Einrichtung umfassend eine zentrale Steuereinheit, die eine Stellgröße als Stellgrößen-Ausgangssignal bereitstellt, einen Messsensor zum Ermitteln eines Messwertes, wobei der Messsensor den Messwert als Messwert-Ausgangssignal für die zentrale Steuereinheit bereitstellt, ferner eine Störmodul, dass den Messwert als Eingangssignal empfängt und eine Störstellgröße als Störstellengrößen-Ausgangssignal bereitstellt.

Ferner wird die Aufgabe gelöst durch ein Verfahren zur Regelung einer Kraftwerksanlage umfassend eine Dampfturbine und einen Generator, wobei der Betriebszustand über Messen von verschiedenen Messwerten ermittelt wird, wobei die Regelung der Anlage zunächst eine Steuereinheit übernimmt, wobei die Regelung in einem Störfall durch ein von der Steuereinheit separates Störmodul erfolgt.

Die Erfindung geht von dem Ansatz aus, dass die Regelung schnell auf Störungen reagieren kann, wenn neben einer zentralen Steuereinheit ein Störmodul realisiert ist, das im Falle eines Störfalls die Regelung schnell übernimmt. Dieses Störmodul umfasst Hardware und Software, wobei die Sensorik und Aktorik darin vereint sind. Das Störmodul ist als Mikrocontroller oder als analoge Schaltung ausgebildet.

Ein Effekt der Erfindung ist, dass die Verbindung der Sensorik und Aktorik in einem Störmodul zu einer sehr schnellen Reaktion auf netzseitige Störungen führt. Eine Reaktion auf so eine Störung kann beispielsweise ein schnelles Unterbinden oder Vorbeiführen der Energiezufuhr in die Turbine sein. Eine netzseitige Störung ist eine anspruchsvolle Aufgabe für die Regelungstechnik, die eine geringe Reaktionszeit aufweist. Diese zeitlich anspruchsvolle Aufgabe wird durch das Störmodul gelöst.

Vorteilhafte Weiterbildungen sind in den Unteransprüchen angegeben.

So ist in einer ersten vorteilhaften Weiterbildung die Einrichtung mit einem Ventil weitergebildet, dessen Ventilstellung über die Stellgröße veränderbar ist.

In einer weiteren vorteilhaften Weiterbildung empfängt das Störmodul folgende Messwerte als Eingangssignale:

Leistung, Ventilstellung, Drehzahl und Netzfrequenz.

In einer weiteren vorteilhaften Weiterbildung werden die Messwerte im Störmodul verarbeitet und die Stellgröße vorrangig zur ermittelten Stellgröße aus der zentralen Steuereinheit an das Ventil gesendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt. Im Hinblick auf Ergänzungen der in der Zeichnung unmittelbar erkennbaren Lehren, wird auf den einschlägigen Stand der Technik verwiesen.

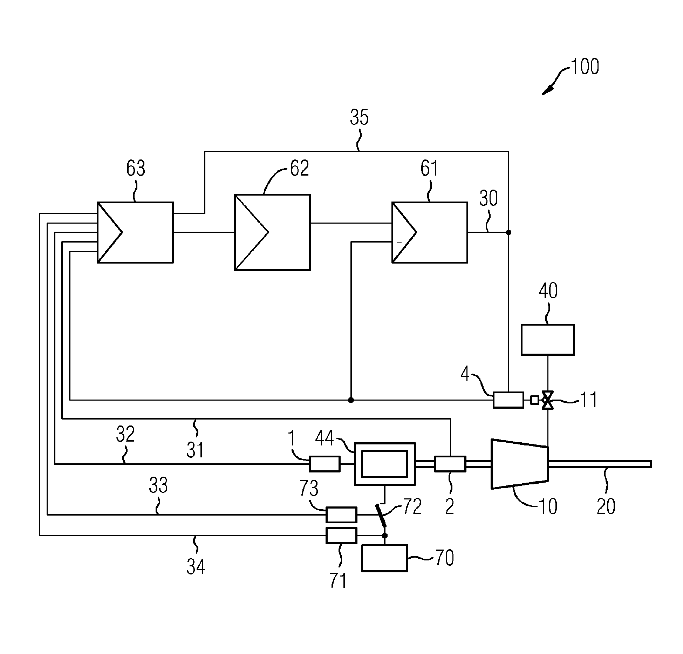

Figur 1 zeigt eine schematische Ansicht einer Kraftwerksregelung.

Figur 1 zeigt in schematisierter Weise eine Übersicht einer Regelung für ein Kraftwerk. Die Regelung umfasst eine Einrichtung 100. Diese Einrichtung 100 weist eine zentrale Steuereinheit 62 auf. Diese zentrale Steuereinheit 62 stellt eine Stellgröße als Stellgrößen-Ausgangssignal 30 zur Verfügung. Die Figur 1 zeigt eine Turbine 10, beispielsweise Dampfturbine, welche über eine Energiequelle wie z. B. Dampf angetrieben werden kann. Der Dampf strömt über ein Ventil 11 in die Dampfturbine 10. Die Ventilstellung des Ventils 11 wird über eine Aktorik 4 beeinflusst. Die Aktorik erhält ein Stellgrößen-Ausgangssignal 30, das von der zentralen Steuereinheit 62 erzeugt wird. Die zentrale Steuereinheit 62 ist mit einem Stellungsregler 61 signaltechnisch verbunden. Die Aktorik 4 wird von der zentralen Steuereinheit 62 über den Stellungsregler 61 beeinflusst. Das Ventil 11 verfügt über eine Sensorik, mit dessen die Ventilstellung ermittelt werden kann. Die Dampfturbine 10 ist über eine Welle 20 mit einem Generator 44 verbunden. Die Drehzahl der Welle 20 wird über einen Drehzahlsensor 2 ermittelt. Der im Drehzahlsensor 2 ermittelte Drehzahlmesswert wird über eine Leitung 31 zu einem Störmodul 63 geführt. Desweiteren wird über einen Leistungssensor 1 die Leistung ermittelt und über eine Datenleitung 32 zum Störmodul 62 geführt.

Der Generator 44 ist über einen Schalter 72 mit einem Verbrauchernetz 70 verbunden. Die Stellung des Schalters kann über einen Schaltermessungssensor 73 ermittelt werden. Das Signal aus dem Schalterstellungsmessungssensor 73 wird über eine Leitung 33 zum Störmodul 63 geführt.

Die Frequenz des Verbrauchersnetzes wird über einen Frequenzmessungssensor 71 ermittelt. Das Signal aus dem Frequenzmessungssensor 71 wird über eine Leitung 34 zum Störmodul 63 geführt.

Die vom Generator 44 ins Verbrauchernetz übertragene Leistung wird über einen Leistungsmessungssensor 1 ermittelt und das Signal aus dem Leistungsmessungssensor 1 wird über die Leitung 32 zum Störmodul 63 übermittelt. Das Störmodul 63 empfängt somit mehrere Messwerte als Eingangssignal. Das Störmodul ist derart ausgebildet, dass das Eingangssignal verarbeitet wird und eine Stör-Stellgröße als Stör-Stellgrößen-Ausgangssignal 35 direkt zur Aktorik 4 geführt wird.

Die Funktionsweise dieser Regelung ist folgendermaßen. Sobald eine netzseitige Störung auftritt wie z. B. ein kraftwerksnaher 3-poliger Kurzschluss wird dieser von dem Störmodul 63 sehr schnell ermittelt. Das Störmodul 63 ist von der zentralen Steuereinheit 62 losgelöst. Daher ist das Störmodul 63 in der Lage schneller als die zentrale Steuereinheit 62 zu reagieren. Das Störmodul 63 verfügt über alle notwendigen Messungen wie z. B. Drehzahlmessungen, Frequenzmessung, Ventilstellungsmessung, Leistungsmessung sowie Schalterstellungsmessung.

Die Einrichtung 100 ermittelt somit den Betriebszustand über Messungen von verschiedenen Messwerten. Die Regelung der Anlage übernimmt zunächst die zentrale Steuereinheit 62. Allerdings wird im Falle eines Störfalls die Regelung durch ein von der Steuereinheit 62 separates Störmodul 63 übernommen. Dies führt zu einer schnelleren Reaktion auf Störungen im Netz.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

**1.** Einrichtung

umfassend eine zentrale Steuereinheit (62), die eine Stellgröße als Stellgrößen-Ausgangssignal (30) bereitstellt, ein Messsensor zum Ermitteln eines Messwertes,
wobei der Messsensor den Messwert als Messwert-Ausgangssignal für die zentrale Steuereinheit (62) bereitstellt, ferner ein Störmodul (63), das den Messwert als Eingangssignal empfängt und eine Störstellgröße als Stör-Stellgrößen-Ausgangssignal (35) bereitstellt.

2. Einrichtung nach Anspruch 1,
mit einem Ventil (11), dessen Ventilstellung über die Stellgröße veränderbar ist.

3. Einrichtung nach Anspruch 2,
wobei das Störmodul (63) ferner folgende Messwerte als Eingangssignale empfängt: Leistung, Ventilstellung, Drehzahl und Netzfrequenz.

4. Einrichtung nach Anspruch 1, 2 oder 3,
wobei eine Störung zu einer Verarbeitung der Messwerte im Störmodul (63) führt und die Stellgröße vorrangig zur ermittelten Stellgröße aus der zentralen Steuereinheit (62) an das Ventil (11) geht.

5. Einrichtung nach einem der vorhergehenden Ansprüche,
wobei das Störmodul (63) die Störung ermittelt.

6. Verfahren zur Regelung einer Kraftwerksanlage, umfassend eine Dampfturbine (10) und einen Generator (44), wobei der Betriebszustand über Messen von verschiedenen Messwerten ermittelt wird, wobei die Regelung der Anlage zunächst eine Steuereinheit übernimmt,
**dadurch gekennzeichnet, dass**
die Regelung in einem Störfall durch ein von der Steuereinheit separates Störmodul (63) erfolgt.

7. Verfahren nach Anspruch 6,
wobei der Störfall ein kraftwerksnaher 3-poliger Kurzschluss ist.

8. Verfahren nach Anspruch 6 oder 7,
wobei als Messwerte die Leistung, Ventilsteuerung, Drehzahl und Netzfrequenz verwendet wird.

Europäisches
Patentamt

European
Patent Office

Office européen
des brevets

**EUROPÄISCHER RECHERCHENBERICHT**

Nummer der Anmeldung

EP 15 18 6022

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 199 256 A (MOORE JAMES H [US]) 6. April 1993 (1993-04-06) | 1,2,4,5 | INV. F01D21/02 G05B9/03 |
| Y | * Spalte 3, Zeile 9 - Zeile 51; Abbildung 1 * * Spalte 4, Zeile 49 - Zeile 65; Abbildung 1 * ----- | 3 | |
| X | EP 2 423 464 A1 (SIEMENS AG [DE]) 29. Februar 2012 (2012-02-29) | 6,7 | |
| Y | * Absatz [0003] - Absatz [0004]; Abbildung 1 * * Absatz [0016]; Abbildung 1 * * Absatz [0022] - Absatz [0023]; Abbildung 1 * * Absatz [0028]; Abbildung 2 * ----- | 3,8 | |
| Y | US 3 198 954 A (EGGENBERGER MARKUS A ET AL) 3. August 1965 (1965-08-03) * Spalte 2, Zeile 1 - Zeile 5 * * Spalte 1, Zeile 20 - Zeile 29 * * Spalte 2, Zeile 48 - Spalte 3, Zeile 70; Abbildung 1 * * Spalte 5, Zeile 51 - Spalte 6, Zeile 41; Abbildung 1 und 3 * ----- | 3,8 | RECHERCHIERTE SACHGEBIETE (IPC) F01D G05B |
| A | EP 1 739 437 A2 (ICS TRIPLEX TECHNOLOGY LTD [GB]) 3. Januar 2007 (2007-01-03) * Absatz [0005] * * Absatz [0032] * ----- | 1-8 | |
| A | EP 1 492 222 A2 (ALSTOM TECHNOLOGY LTD [CH]) 29. Dezember 2004 (2004-12-29) * Absatz [0014] - Absatz [0015] * * Absatz [0029] - Absatz [0034]; Abbildung 1 * ----- | 1-8 | |

Der vorliegende Recherchenbericht wurde für alle Patentansprüche erstellt

| Recherchenort | Abschlußdatum der Recherche | Prüfer |
|---|---|---|
| München | 17. März 2016 | Bernard, Eddy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 18 6022

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2016

| Im Recherchenbericht angeführtes Patentdokument | | Datum der Veröffentlichung | Mitglied(er) der Patentfamilie | | Datum der Veröffentlichung |
|---|---|---|---|---|---|
| US 5199256 | A | 06-04-1993 | KEINE | | |
| EP 2423464 | A1 | 29-02-2012 | CN | 103080483 A | 01-05-2013 |
| | | | EP | 2423464 A1 | 29-02-2012 |
| | | | EP | 2609301 A1 | 03-07-2013 |
| | | | WO | 2012025447 A1 | 01-03-2012 |
| US 3198954 | A | 03-08-1965 | CH | 404414 A | 15-12-1965 |
| | | | DE | 1426499 A1 | 08-10-1970 |
| | | | GB | 1015292 A | 31-12-1965 |
| | | | US | 3198954 A | 03-08-1965 |
| EP 1739437 | A2 | 03-01-2007 | EP | 1739437 A2 | 03-01-2007 |
| | | | GB | 2427940 A | 10-01-2007 |
| | | | US | 2007000230 A1 | 04-01-2007 |
| EP 1492222 | A2 | 29-12-2004 | DE | 10328932 A1 | 13-01-2005 |
| | | | EP | 1492222 A2 | 29-12-2004 |

EPO FORM P0461

Für nähere Einzelheiten zu diesem Anhang : siehe Amtsblatt des Europäischen Patentamts, Nr.12/82